# EUROPEAN PATENT SPECIFICATION

(11) **EP 0 721 282 B1**
(45) Date of publication and mention of the grant of the patent: **22.11.2000**
(21) Application number: 96300034.4
(22) Date of filing: 03.01.1996
(51) Int. Cl.: H04N 5/445

(54) **Remote control for a television system**
Fernbedienung für ein Fernsehsystem
Télécommande pour un système de télévision

(30) Priority: 04.01.1995 US 368331; 04.01.1995 US 368373
(43) Date of publication of application: 10.07.1996
(60) Divisional application: 99200218.8
(73) Proprietor: SONY ELECTRONICS INC., Park Ridge, New Jersey 07656 (US)
(72) Inventor: Martin, Jeffrey A., Escondido, California 92027 (US); Ido, Toshikazu, San Diego, California 92128 (US)
(74) Representative: Cotter, Ivan John

(56) References cited:
- US-A- 4 455 487
- US-A- 4 904 993
- US-A- 4 918 439
- US-A- 5 001 558
- US-A- 5 138 649
- US-A- 5 307 193

## Description

This invention relates to remote control and reception and is applicable, for example, to video or television systems.

Prior electronic systems such as televisions, video recorders and players, and video receivers commonly provide a remote control mechanism. Such remote control mechanisms typically enable users to control a variety of system functions from a distance. For example, prior television systems commonly include a hand-held remote control unit that enables channel selection and volume control as well as control over other functions. Similarly, prior video cassette recorders typically provide remote control units that enable remote control of record and playback functions as well as channel selection functions. In addition, prior audio systems commonly include remote control units that enable remote control of various functions of the audio system.

Some prior electronic systems provide remote control units that employ infrared signals for command communications. Such systems typically include a hand held remote infrared transmitter that communicates with an infrared receiver embedded in a control unit for the system. Such infrared based remote control usually offer the advantage of relatively low cost. However, such infrared based communication typically imposes a limited range between the infrared transmitter and the corresponding infrared receiver. In addition, such infrared communication usually requires line of sight communication between the hand held transmitter and the control unit that contains the infrared receiver.

Other prior electronic systems employ radio frequency based remote control mechanisms. Typically in such systems, a hand held remote control transmitter generates radio frequency command signals in response to user selected functions. The radio frequency command signals are usually received and decoded by a receiver/control unit for the electronic system.

Radio frequency based remote control mechanisms typically provide increased communication range in comparison to infrared based remote control mechanisms. In addition, radio frequency communication is usually not limited to line of sight communication.

Unfortunately, such increased communication range available from radio frequency based remote control mechanisms creates the possibility of interference among systems. For example, the radio frequency transmissions from a given remote control unit may be received by other electronic systems contained within adjacent rooms or buildings. Such stray command signals may initiate undesirable control functions in other electronic systems and provide unnecessary annoyance to the users.

Prior systems usually prevent such remote control interference by allocating a control identifier to each system. Typically, such a control identifier associates a hand-held remote control unit with a corresponding receiver/control unit. In such a system, the hand-held remote control unit transmits the control identifier with each command transmission. Each receiver/control unit responds only to the command signals that include the proper control identifier. Such a mechanism usually prevents such remote control transmitters from inadvertently controlling unintended electronic systems.

Typically, such control identifiers are user selectable over a small range of values. Prior systems usually include mechanical switches or dials that enable a user to set or modify the control identifier. Such mechanical switches or dials are typically included in both the remote control unit and the corresponding receiver/control unit. Unfortunately, such mechanical switches or dials are needlessly cumbersome and typically increase the cost of remote control in such an electronic system.

Some prior electronic systems such as the one disclosed in the US Patent Serial Number 4,904,993 may implement remote control mechanisms that employ both infrared and radio frequency communication. However, such systems typically include a mechanical switch that selects either the infrared or the radio frequency as the active communication link. Such mechanical switching is meant to eliminate the possibility of conflicting commands being received from the different remote transmitters. Unfortunately, such mechanical switches are unnecessarily cumbersome for the remote control of such electronic systems.

US Patent Serial Number 4, 918, 439, discloses a remote control device having an infrared transducer and a radio transmitter. This provides the remote control device with a facility for communicating with appliances which receive infrared signals and with appliances which receive radio signals.

Respective aspects of the invention are set out in the respective independent claims hereof.

A preferred form of implementation of the invention described below provides a video system comprising a remote identifier setup display on a television monitor. The video system enables a user to enter a remote control identifier for the radio frequency transmitter through the remote identifier setup display using the infrared transmitter. The receiver initially ignores remote command signals received from the radio frequency transmitter until the remote control identifier is entered.

The preferred form of implementation of the invention described below provides:
the ability for a user to set and modify a control identifier for remote control in an electronics system;
a user interface that enables a user to select either a radio frequency or an infrared transmitter source as an active source for remote control functions in the electronics system;

The invention will now be further described, by way of illustrative and non-limiting example, with reference to the accompanying drawings, in which like references indicate similar elements, and in which:
Figure 1 illustrates a video system in which the present invention may be implemented that includes a satellite receiver which is controlled via an RF and IR remote command unit;
Figure 2 illustrates the satellite receiver shown in Figure 1, which includes a remote control switching circuit, an infrared sensor, and circuitry for generating displays on the television monitor;
Figure 3 is a schematic diagram of the remote control switching circuit shown in Figure 2;
Figure 4 is a timing diagram that illustrates the operation of the remote control switching circuit;
Figure 5 illustrates a user interface for setting a control identifier for the RF/IR remote control unit for one embodiment; and
Figure 6 illustrates a user interface function that enables a user to select from between RF and IR communication for primary communication between the RF/IR remote control unit and the satellite receiver.

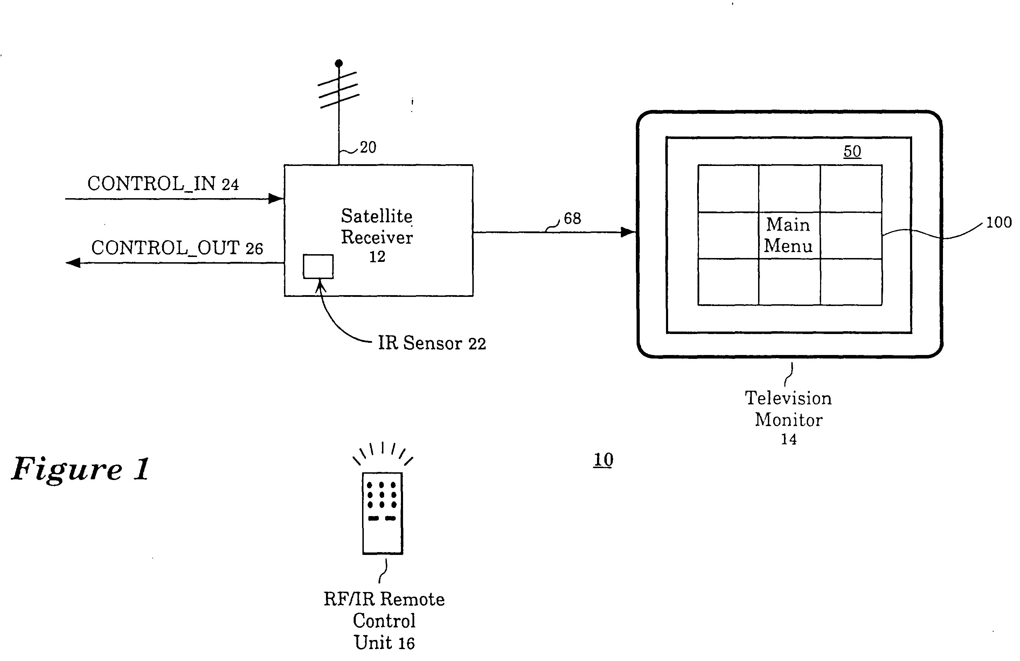

Figure 1 illustrates a video system 10 in which the present invention may be implemented. The video system 10 includes a satellite receiver 12 and a television monitor 14. The satellite receiver 12 provides a set of user controllable functions which are remotely controllable. The satellite receiver 12 receives and decodes command signals that originate from a variety of differing sources.

The user controllable functions of the video system may be controlled via a radio frequency and infrared (RF/IR) remote control unit 16. The satellite receiver 12 receives infrared command signals from the RF/IR remote control unit 16 via an IR sensor 22. The IR sensor 22 converts infrared signals into electrical signals for command processing and decoding. The satellite receiver 12 includes an RF antenna 20 that receives radio frequency command signals from the RF/IR remote unit 16. Alternatively, the IR and RF command signals may originate from separate hand-held remote control units (not shown) each having either an IR or an RF transmitter.

In addition, the satellite receiver 12 accepts commands via a CONTROL_IN signal 24 from other electronic equipment such as video or audio equipment (not shown). The satellite receiver 12 in turn generates a CONTROL_OUT signal 26 to drive other video and audio equipment. The CONTROL_OUT signal 26 reflects command signals received by the satellite receiver 12 from the RF/IR remote control unit 16 or via the CONTROL_IN signal 24.

The satellite receiver 12 generates video images on a display surface 50 of the television monitor 14. The satellite receiver 12 generates a set of video signals 68 to provide images on the display surface 50. Preferably the images rendered on the display surface 50 by the satellite receiver 12 include user interface images such as a main menu 100. The main menu 100 preferably enables user control of various setup functions for the satellite receiver 12 via the RF/IR remote control unit 16.

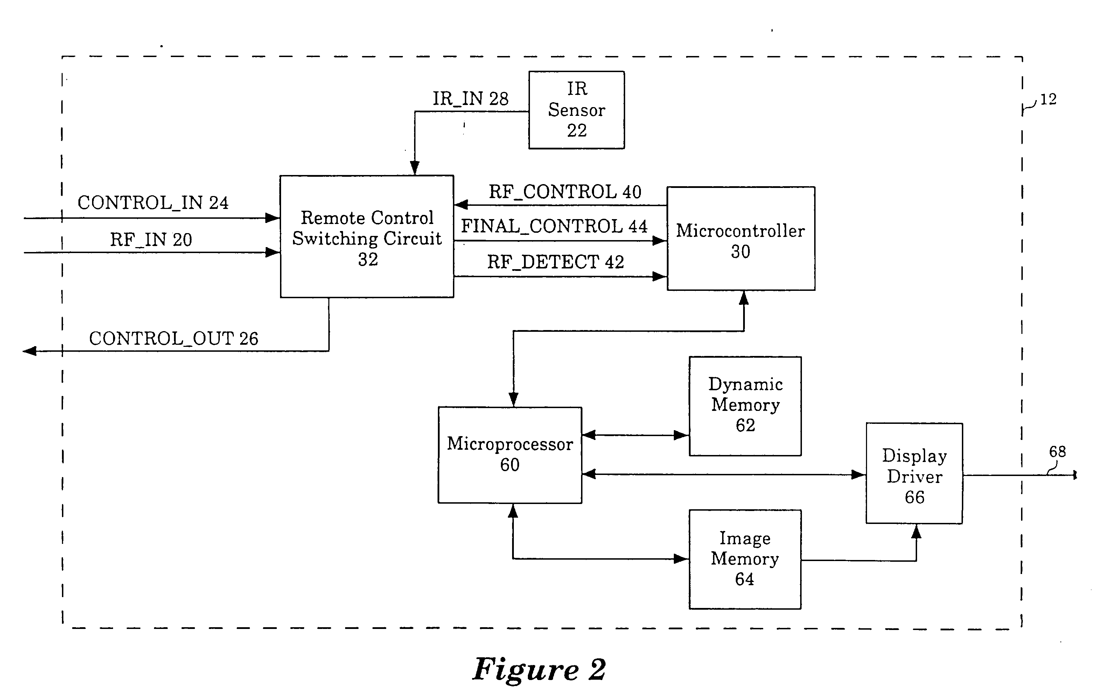

Figure 2 illustrates the satellite receiver 12 shown in Figure 1 in more detail. The satellite receiver 12 includes a microcontroller 30, a remote control switching circuit 32, and the IR sensor 22. The remote control switching circuit 32 receives remote command signals via the CONTROL_IN signal 24 and via an RF_IN signal 20 from the RF antenna 20. The remote control switching circuit 32 also receives remote command signals via an IR_IN signal 28 from the IR sensor 22.

The microcontroller 30 generates an RF_CONTROL signal 40 for the remote control switching circuit 32. The RF_CONTROL signal 40 determines the priority of the RF_IN signal 20 in relation to the IR_IN signal 28 and the CONTROL_IN signal 24. The RF_CONTROL signal 40 is software controllable and either enables or disables remote control functions via the RF_IN signal 20 transmitted by the RF/IR remote control unit 16. The RF_CONTROL signal 40, when low, selects the RF_IN signal 20 as the highest priority, followed by the CONTROL_IN signal 24 and then the IR_IN signal 28. The RF_CONTROL signal 40, when high, selects the CONTROL_IN signal 24 as the highest priority, followed by the IR_IN signal 28, while the RF_IN signal 20 is ignored.

The remote control switching circuit 32 combines the CONTROL_IN signal 24 with the RF_IN signal 20 and the IR_IN signal 28 according to the priority indicated by the RF_CONTROL signal 40. The remote control switching circuit 32 generates a FINAL_CONTROL signal 44 that provides a combination of the CONTROL_IN signal 24 with the RF_IN signal 20 sensed by the RF antenna 20 and the IR_IN signal 28 sensed by the IR sensor 22.

The remote control switching circuit 32 also generates an RF_DETECT signal 42 that indicates whether a remote radio frequency command signal is being received from the RF/IR remote control unit 16 via the RF antenna 20. The microcontroller 30 uses the RF_DETECT signal 42 to determine whether to test the FINAL_CONTROL signal 44 for the proper control identifier security code for RF communication. The remote control switching circuit 32 generates a CONTROL_OUT signal 26 as a combination of the CONTROL_IN signal 24 with the IR_IN signal 28 sensed by the IR sensor 22.

Preferably the satellite receiver 12 further comprises a microprocessor 60, a dynamic memory 62, an image memory 64 and a display driver 66. The microprocessor 60 receives decoded commands from the microcontroller 30. The commands originate from the RF/IR remote control unit 16 or the CONTROL_IN signal 24. The microprocessor 60 uses the decoded commands to control user interface displays on the display surface 50 through the display driver 66.

The microprocessor 60 renders the user interface displays including the main menu 100 and other menu and window displays into the image memory 64. The images in the image memory 64 are transferred to the display driver 66. The display driver 66 then generates the video signals 68 that drive the television monitor 14.

As will be discussed further below, according to the example embodiment of the invention, microprocessor 60 stores a control identifier for the RF/IR remote control unit 16 in the dynamic memory 62. The microprocessor 60 implements a user interface function on the display surface 50 of the television monitor 14 that enables a user to alter the control identifier stored in the static memory 62 via the RF/IR remote control unit 16.

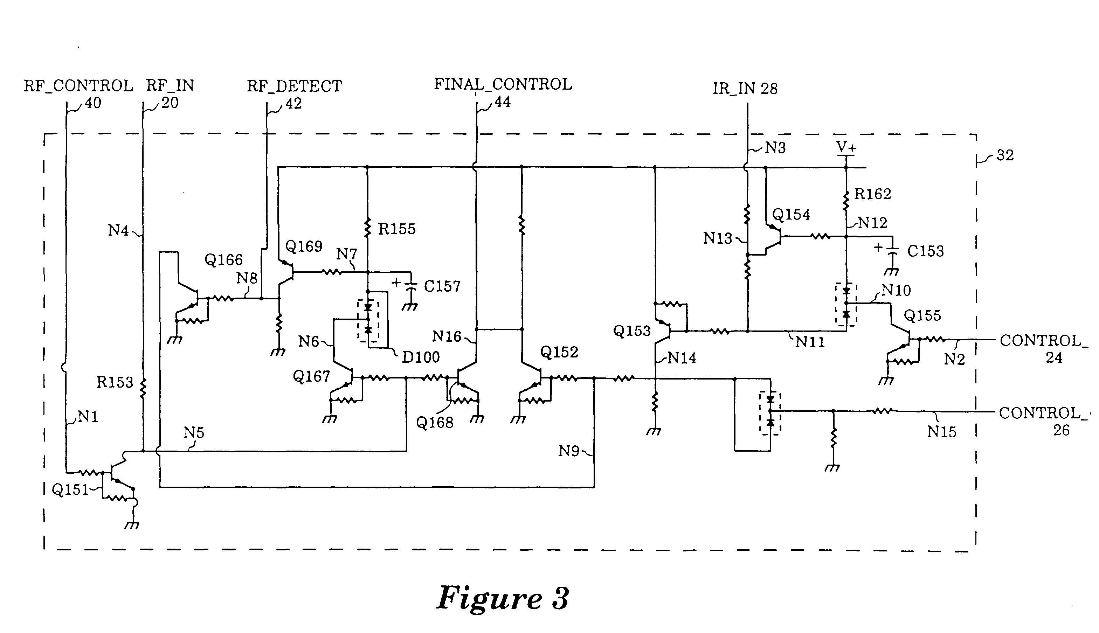

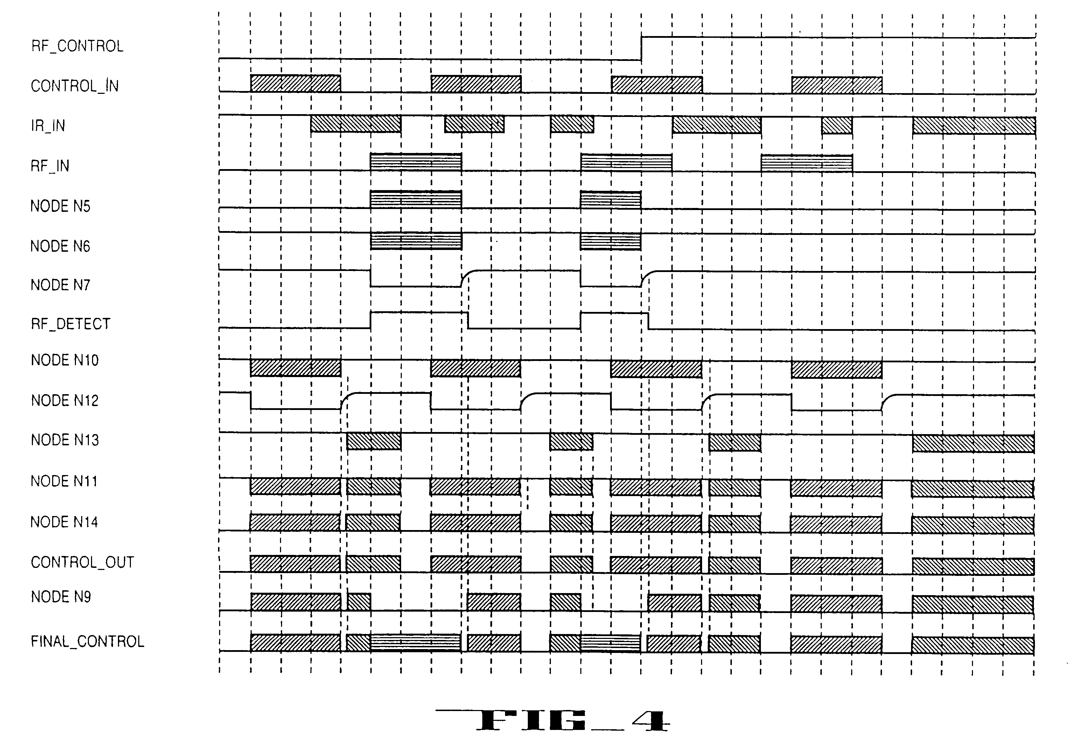

Figure 3 is a schematic diagram of an implementation of the remote control switching circuit 32. Figure 4 is a timing diagram that illustrates the operation of the remote control switching circuit 32. The remote control switching circuit 32 receives the RF_CONTROL signal 40 from the microprocessor 30 at a node N1. The RF_CONTROL signal 40 is software controllable via the microprocessor 30 to enable and disable remote commands from the RF remote control unit 16.

The remote control switching circuit 32 receives the CONTROL_IN signal 24 from external audio or video equipment at a node N2. The remote control switching circuit 32 receives the IR_IN signal 28 at a node N3 and the RF_IN signal 20 at a Node N4. A transistor Q151 either blocks or passes the RF_IN signal 20 under control of the RF_CONTROL signal 40 as indicated by the signal at a node N5 (Fig. 4). A transistor Q167 inverts the RF_IN signal 20 present at node N5 as shown at node N6.

The signal shown at node N7 (Fig. 4) results from an RC circuit comprised of a resistor R155 and a capacitor C157. The resistor R155 and the capacitor C157 yield a time constant, T = (1 megohm) x (1 microfarad) equal to 1 second, whenever the signal at the node N6 transitions from a low to a high level (for the high-to-low transition, the time constant is 1 micro farad x the inner resistance of the diode D100, which is very small. Therefore, the transition is sharp). Since the digital RF_IN signal 20 from the RF remote control unit 16 operates at a relatively high frequency in comparison to the time constant T, the signal at a node N7 remains near 0 volts while the RF remote control unit 16 is in use and the RF_IN signal 20 is active. When the RF_IN signal 20 transitions from active to inactive, the signal at node N6 reaches a high level.

A transistor Q169 converts the signal at node N7 into a digital signal at node N8 as shown in **Figure 4**. The signal at node N8 is transferred to the microprocessor 30 as the RF_DETECT signal 42. The RF_DETECT signal 42 indicates active periods of the RF remote control unit 16.

The remote control switching circuit 32 receives the CONTROL_IN signal 24 at a node N2. A transistor Q155 inverts the CONTROL_IN signal 24 as shown at a node N10 (**Figure 4**). An RC circuit comprising resistor R162 and capacitor C153 causes a time constant of approximately one second as indicated by a signal at a node N12 (**Figure 4**). Whenever the signal at the node N10 switches from a low to a high voltage level, the RC circuit at node N12 slows down the transition. As a result, the signal at the node N12 stays low whenever the CONTROL_IN signal 24 is active. A transistor Q154 blocks out the IR_IN signal 28 received at node N3 while the CONTROL_IN signal 24 is active as indicated by the signal at the node N12 (**Figure 4**).

The remote control switching circuit 32 combines the IR_IN signal 28 and the CONTROL_IN signal 24 at a node N11. As shown in **Figure 4**, the signal at the node N11 is active whenever the CONTROL_IN signal 24 is high. If the CONTROL_IN signal 24 is low then a transistor Q155 will be switched off and the signal at a node N13 passes to the node N11. Since the IR_IN signal 28 at the node N13 is blocked whenever the CONTROL_IN signal 24 is active, it follows that the signal at the node N13 is always inactive while the signal at a node N10 is active. In addition, the signal at the node N13 is always active when the signal at the node N10 is inactive. The signal at the node N13 is inverted by a transistor Q153 as shown at a node N14 (**Figure 4**).

At a node N9 (**Figure 4**), the IR_IN signal 28 and the CONTROL_IN signal 24 are blocked whenever the RF_DETECT signal 42 is high in response to the RF_IN signal 20 being active.

The remote control switching circuit 32 generates the FINAL_CONTROL signal 44 at a node N16. The signal shown in **Figure 4** at the node N16 provides a combination of the RF_IN signal 20 at the node N5 and the IR_IN signal 28 and CONTROL_IN signal 24 at the node N9. Since the signal at the node N9 is never active while the signal at the node N5 is active and since the signal at the node N9 is never inactive while the signal at the node N5 is active, it follows that the transistors Q168 and Q152 function as a logical "or" gate. The transistors Q168 and Q152 taken together pass any high level command signal without interference among the various remote command signals received from the IR remote control unit 18 and the RF remote unit 16 and received via the CONTROL_IN signal 24.

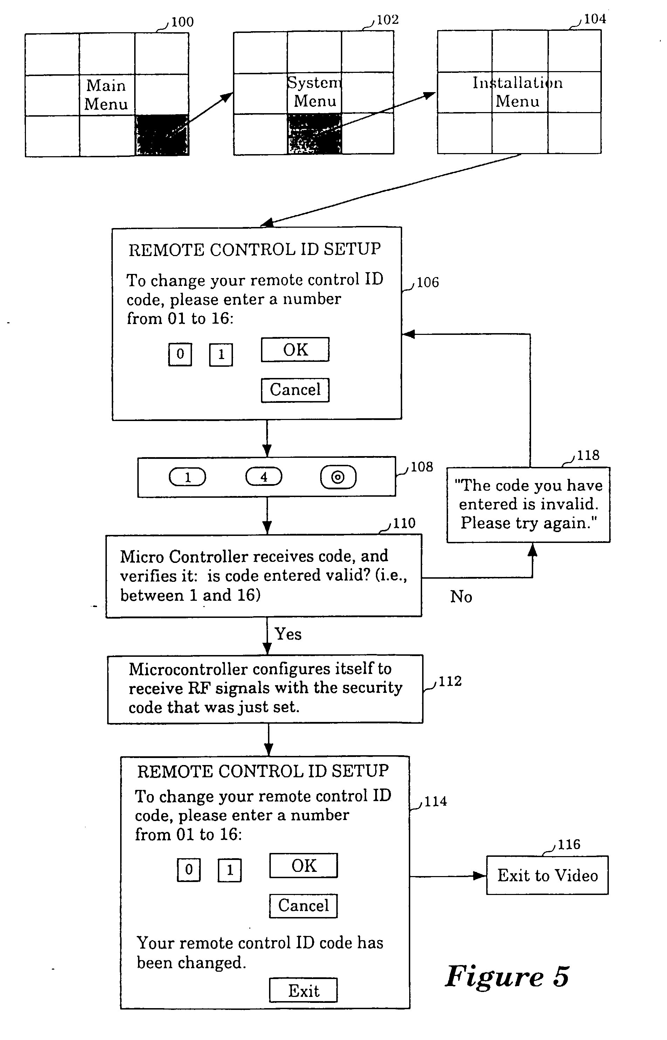

Figure 5 illustrates an example embodiment of a user interface for setting a control identifier for the RF/IR remote control unit 16 is described. This example embodiment may operate in conjunction with the circuitry depicted in Figure 3. Referring back to Figure 5, initially, the microprocessor 60 displays the main menu 100 on the display surface 50. In addition, the unit is factory preset so that the microprocessor 60 initially drives the RF_CONTROL signal 40 high. This disables the RF_IN signal 20 and thereby enable command entry via the IR communication channel of the RF/lR remote control unit 16.

The user then employs the RF/IR remote control unit 16 to select a system menu 102 from the main menu 100 using the IR communication link to the IR sensor 22. Thereafter, the user selects an installation menu 104 from the system menu 102 via the IR communication link of the RF/IR remote control unit 16. The user then selects a remote control identifier setup display 106 from the installation menu 104.

The microprocessor 60 generates the remote control identifier setup display 106 on the display surface 50. The remote control identifier setup display 106 enables a user to select a remote control identifier code via the IR communication link from the RF/IR remote control unit 16. At block 108, the user selects a remote control identifier code equal to 14 via the RF/lR remote control unit 16 in the example shown.

At block 110, the microcontroller 30 receives and verifies the validity of the control identifier code entered at block 108. If the control identifier code entered at block 108 is valid then control proceeds to block 112. At block 112 the microcontroller configures the satellite receiver 12 to receive and process only the RF signals having a security code equal to 14 according to the user entry at block 108. Thereafter, the microcontroller 30 ignores RF command signals that do not contain the control identifier of 14.

The microprocessor 60 then displays a remote control identifier setup display 114 that indicates that the control identifier code has been changed. Thereafter at block 116, the microprocessor 60 exits the setup identifier user interface function and displays normal video on the display surface 50 of the television monitor 14.

If an invalid control identifier was entered at block 108 then control proceeds from block 110 to block 118. For one embodiment, the control identifier is invalid if outside a predetermined range of 1-16. At block 118 an invalid code message is displayed on the display surface 50. Thereafter, the microprocessor 60 redisplays the remote control identifier setup display 106 on the display surface 50 to enable another entry by the user.

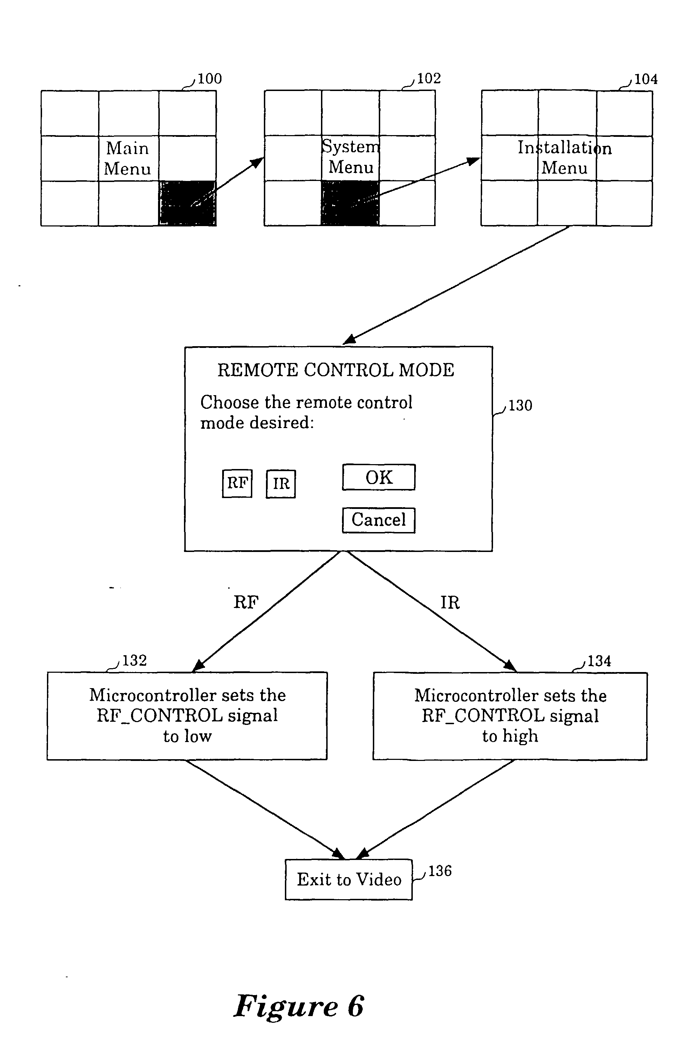

Figure 6 illustrates an example of a user interface function which enables a user to select from among the RF and the IR communication channels as the active communication link between the RF/IR remote control unit 16 and the satellite receiver 12. Initially, the microprocessor 60 displays the main menu 100 on the display surface 50. The RF_CONTROL signal 40 may be either high or low thereby enabling or disabling RF communication from the RF/IR remote control unit 16.

The user then employs the RF/IR remote control unit 16 to select the system menu 102 from the main menu 100, and then to select the installation menu 104 and then to select a remote control mode display 130 from the installation menu 104. The microprocessor 60 generates the remote control mode display 130 on the display surface 50.

The remote control mode display 130 enables a user to select either an RF or an IR control mode for communication with the RF/IR remote control unit 16. If the user selects the RF remote control mode then control proceeds to block 132. At block 132 the microcontroller 30 sets the RF_CONTROL signal 40 to a low level to enable the RF control link between the RF/IR remote control unit 16 and the satellite receiver 12.

On the other hand, if the user selects the IR remote control mode through the remote control display 130 then control proceeds to block 134. At block 134 the microcontroller 30 sets the RF_CONTROL signal 40 to a high level to disable the RF channel and to select the IR channel to the IR sensor 22 of the satellite receiver 12. Thereafter, at block 136 the microprocessor 60 generates a normal video display on the display surface 50 of the television monitor 14.

In the foregoing specification the invention has been described with reference to a specific exemplary embodiment thereof. It will, however, be evident that various modifications and changes may be made thereto without departing from the broader scope of the invention as set forth in the appended claims. The specification and drawings are accordingly to be regarded as illustrative rather than a restrictive sense.

## Claims

1. A video system comprising a receiver that generates a remote control identifier setup display on a television monitor and further comprising a remote control unit having a radio frequency transmitter and an infrared transmitter that enables a user to enter a remote control identifier for the radio frequency transmitter through the remote control identifier setup display using the infrared transmitter.

2. The video system of claim 1, wherein the receiver initially ignores remote command signals received from the radio frequency transmitter until the remote control identifier is entered.

3. The video system of claim 2, wherein the receiver ignores remote command signals received from the radio frequency transmitter unless the remote commands signals include the remote control identifier.

4. The video system of claim 1, wherein the receiver generates a remote control mode display on the television monitor that enables the user to select either the infrared or the radio frequency transmitter as a primary source for receiving remote command signals for the video system.

5. A method for setting up a remote control identifier for a remote control unit in a video system, comprising the steps of:
generating a setup display for the remote control identifier such that the setup display enables a user to select the remote control identifier via the remote control unit having a radio frequency transmitter and an infrared transmitter;
receiving an infrared signal from the infrared transmitter of the remote control unit such that the infrared signal selects the remote control identifier for the radio frequency transmitter through the remote control identifier setup display.

6. The method of claim 5, further comprising the step of initially ignoring remote command signals received from the radio frequency transmitter until the remote control identifier is selected.

7. The method of claim 6, further comprising the step of ignoring remote command signals received from the radio frequency transmitter unless the remote commands signals include the remote control identifier.

8. The method of claim 5, further comprising the step of generating a remote control mode display that enables the user to select either the infrared or the radio frequency transmitter as a primary source for receiving remote command signals for the video system.

9. An apparatus for setting up a remote identifier for a remote control unit in a video system, comprising:
means for generating a setup display for the remote control identifier such that the setup display enables a user to select the remote control identifier via the remote control unit having a radio frequency transmitter and an infrared transmitter;
means for receiving an infrared signal from the infrared transmitter of the remote control unit such that the infrared signal selects the remote control identifier for the radio frequency transmitter through the remote control identifier setup display.

10. The apparatus of claim 9, further comprising means for initially ignoring remote command signals received from the radio frequency transmitter until the remote contol identifier is selected.

11. The apparatus of claim 10, further comprising means for ignoring remote command signals received from the radio frequency transmitter unless the remote commands signals include the remote control identifier.

12. The apparatus of claim 9, further comprising means for generating a remote control mode display that enables the user to select either the infrared or the radio frequency transmitter as a primary source for receiving remote command signals for the video system.

## Patentansprüche

1. Videosystem, das einen eine Fernsteuerungskennzeichen-Einrichtungsanzeige auf einem Fernsehmonitor erzeugenden Empfänger und ferner eine einen Hochfrequenzsender und einen Infrarotsender enthaltende Fernsteuerungseinheit umfaßt, die einem Benutzer ermöglicht, ein Fernsteuerungskennzeichen für den Hochfrequenzsender mittels der Fernsteuerungskennzeichen-Einrichtungsanzeige unter Verwendung des Infrarotsenders einzugeben.

2. Videosystem nach Anspruch 1, wobei der Empfänger zunächst von dem Hochfrequenzsender her empfangene Fernsteuerungs-Befehlssignale ignoriert, bis das Fernsteuerungskennzeichen eingegeben ist.

3. Videosystem nach Anspruch 2, wobei der Empfänger die von dem Hochfrequenzsender empfangenen Fernsteuerungs-Befehlssignale ignoriert, außer wenn die Fernsteuerungs-Befehlssignale das Fernsteuerungskennzeichen enthalten.

4. Videosystem nach Anspruch 1, wobei der Empfänger auf dem Fernsehmonitor eine Fernsteuerungs-Betriebsanzeige erzeugt, die dem Benutzer ermöglicht, entweder den Infrarotsender oder den Hochfrequenzsender als primäre Quelle für das Videosystem zum Empfang von Fernsteuerungs-Befehlssignalen auszuwählen.

5. Verfahren zum Einrichten eines Fernsteuerungskennzeichens für eine Fernsteuerungseinheit in einem Videosystem, umfassend die Schritte: Erzeugen einer Einrichtungsanzeige für das Fernsteuerungskennzeichen, derart, dass die Einrichtungsanzeige einem Benutzer ermöglicht, das Fernsteuerungskennzeichen mittels der Fernsteuerungseinheit auszuwählen, die über einen Hochfrequenzsender und einen Infrarotsender verfügt, wobei der Empfang eines Infrarotsignals von dem Infrarotsender der Fernsteuerungseinheit derart erfolgt, dass das Infrarotsignal das Fernsteuerungskennzeichen für den Hochfrequenzsender mittels der Fernsteuerungskennzeichen-Einrichtungsanzeige auswählt.

6. Verfahren nach Anspruch 5, umfassend ferner den Schritt des anfänglichen Ignorierens von Fernsteuerungs-Befehlssignalen, die von dem Hochfrequenzsender her empfangen werden, bis das Fernsteuerungskennzeichen ausgewählt ist.

7. Verfahren nach Anspruch 6, umfassend ferner den Schritt des Ignorierens der Fernsteuerungs-Befehlssignale, die von dem Hochfrequenzsender her empfangen werden, außer wenn die Fernsteuerungs-Befehlssignale das Fernsteuerungskennzeichen enthalten.

8. Verfahren nach Anspruch 5, umfassend ferner den Schritt der Erzeugung einer Fernsteuerungs-Betriebsanzeige, die dem Benutzer ermöglicht, entweder den Infrarotsender oder den Hochfrequenzsender als primäre Quelle für das Videosystem zum Empfang von Fernsteuerungs-Befehlssignalen auszuwählen.

9. Vorrichtung zum Einrichten eines Fernsteuerungskennzeichens für eine Fernsteuerungseinheit in einem Videosystem, umfassend Einrichtungen zur Erzeugung einer Einrichtungsanzeige für das Fernsteuerungskennzeichen, derart, dass die Einrichtungsanzeige einem Benutzer ermöglicht, das Fernsteuerungskennzeichen mittels der Fernsteuerungseinheit auszuwählen, die über einen Hochfrequenzsender und einen Infrarotsender verfügt, Einrichtungen für den Empfang eines Infrarotsignals von dem infrarotsender der Fernsteuerungseinheit, derart, dass das Infrarotsignal das Fernsteuerungskennzeichen für den Hochfrequenzsender mittels der Fernsteuerungskennzeichen-Einrichtungsanzeige auswählt.

10. Vorrichtung nach Anspruch 9, umfassend ferner Einrichtungen zum anfänglichen Ignorieren der von dem Hochfrequenzsender her empfangenen Fernsteuerungs-Befehlssignale, bis das Fernsteuerungskennzeichen ausgewählt ist.

11. Vorrichtung nach Anspruch 10, umfassend ferner Einrichtungen zum Ignorieren der von dem Hochfrequenzsender her empfangenen Fernsteuerungs-Befehlssignale, außer wenn die Fernsteuerungs-Befehlssignale das Fernsteuerungskennzeichen enthalten.

12. Vorrichtung nach Anspruch 9, umfassend ferner Einrichtungen zur Erzeugung einer Fernsteuerungs-Betriebsanzeige, die dem Benutzer ermöglicht, entweder den Infrarotsender oder den Hochfrequenzsender als primäre Quelle für das Videosystem zum Empfang von Fernsteuerungs-Befehlssignalen auszuwählen.

## Revendications

1. Système vidéo comprenant un récepteur qui génère un affichage de réglage d'identifieur de télécommande sur un moniteur de télévision et comprenant en outre une unité de télécommande ayant un émetteur radio fréquence et un émetteur infrarouge qui permet à un utilisateur d'introduire un identifieur de télécommande pour l'émetteur radio fréquence via l'affichage de réglage d'identifieur de télécommande en utilisant l'émetteur infrarouge.

2. Système vidéo de la revendication 1, dans lequel le récepteur ignore initialement les signaux de télécommande reçus de l'émetteur radio fréquence jusqu'à ce que l'identifieur de télécommande soit introduit.

3. Système vidéo selon la revendication 2, dans lequel le récepteur ignore des signaux de télécommande reçus de l'émetteur radio fréquence à moins que les signaux de télécommande comprennent l'identifieur de télécommande.

4. Système vidéo selon la revendication 1, dans lequel le récepteur génère un affichage de mode de télécommande sur le moniteur de télévision qui permet à l'utilisateur de sélectionner soit l'émetteur infrarouge soit radio fréquence comme source principale pour les signaux de télécommande de réception pour le système vidéo.

5. Procédé pour régler un identifieur de télécommande pour une unité de télécommande dans un système vidéo comprenant les étapes de :
génération d'un affichage de réglage pour l'identifieur de télécommande pour que l'affichage de réglage permette à l'utilisateur de sélectionner un identifieur de télécommande via une unité de télécommande ayant un émetteur radio fréquence et un émetteur à infrarouge ;
réception d'un signal infrarouge de l'émetteur de l'unité de télécommande de sorte que le signal infrarouge sélectionne l'identifieur de télécommande pour l'émetteur radio fréquence via l'affichage de réglage d'identifieur de télécommande.

6. Procédé selon la revendication 5, comprenant en outre l'étape pour ignorer initialement les signaux de télécommande reçus de l'émetteur radio fréquence jusqu'à ce que l'identifieur de télécommande soit sélectionné.

7. Procédé selon la revendication 6, comprenant en outre l'étape pour ignorer les signaux de télécommande reçus de l'émetteur radio fréquence à moins que les signaux de télécommande comprennent l'identifieur de télécommande.

8. Procédé selon la revendication 5, comprenant en outre l'étape de génération d'un affichage de mode de télécommande qui permette à l'utilisateur de sélectionner soit l'émetteur infrarouge soit l'émetteur radio fréquence comme source principale pour recevoir des signaux de télécommande pour le système vidéo.

9. Appareil pour régler un identifieur de télécommande pour une unité de télécommande dans un système vidéo, comprenant :
un moyen pour générer un affichage de réglage pour l'identifieur de télécommande pour que l'affichage de réglage permette à un utilisateur de sélectionner l'identifieur de télécommande via l'unité de télécommande ayant un émetteur radio fréquence et un émetteur infrarouge ;
un moyen pour recevoir un signal infrarouge de l'émetteur infrarouge de l'unité de télécommande pour que le signal infrarouge sélectionne l'identifieur de télécommande destiné à l'émetteur radio fréquence via l'affichage de réglage d'identifieur de télécommande.

10. Appareil selon la revendication 9, comprenant en outre un moyen pour ignorer initialement des signaux de télécommande reçus de l'émetteur radio fréquence jusqu'à ce que l'identifieur de télécommande soit sélectionné.

11. Appareil selon la revendication 10, comprenant en outre un moyen pour ignorer des signaux de télécommande reçus de l'émetteur radio fréquence à moins que les signaux de télécommande comprennent l'identifieur de télécommande.

12. Appareil selon la revendication 9, comprenant en outre un moyen pour générer un affichage de télécommande qui permette à l'utilisateur de sélectionner l'émetteur soit infrarouge soit radio fréquence comme source principale pour recevoir des signaux de télécommande du système vidéo.
